Europäisches Patentamt

(19) European Patent Office

Office européen des brevets

(11) Publication number: **0 258 958 B1**

(12) **EUROPEAN PATENT SPECIFICATION**

(45) Date of publication of patent specification:
03.07.91 Bulletin 91/27

(51) Int. Cl.⁵: **G21C 17/00**

(21) Application number: **87303391.4**

(22) Date of filing: **16.04.87**

(54) Locating a breached fuel assembly in a nuclear reactor on-line.

(30) Priority: **18.08.86 US 897457**

(43) Date of publication of application:
**09.03.88 Bulletin 88/10**

(45) Publication of the grant of the patent:
**03.07.91 Bulletin 91/27**

(84) Designated Contracting States:
**BE CH ES FR GB IT LI**

(56) References cited:
**EP-A- 0 113 670**
**DE-A- 1 764 811**
**DE-A- 2 037 796**
**DE-A- 2 156 022**
**DE-A- 2 727 853**
**DE-A- 2 942 055**
**DE-B- 1 423 723**
**US-A- 3 293 434**
**US-A- 3 395 074**
**US-A- 3 715 270**
**US-A- 3 786 257**
**US-A- 3 819 936**

(73) Proprietor: **WESTINGHOUSE ELECTRIC CORPORATION**
**Westinghouse Building Gateway Center**
**Pittsburgh Pennsylvania 15222 (US)**

(72) Inventor: **Tang, Edward Lunhan**
**2451 Montgomery Avenue**
**Richland Washington 99352 (US)**
Inventor: **Bunch, Wilbur Lyle**
**2403 Pullen**
**Richland Washington 99352 (US)**
Inventor: **Carter, Robert Leroy, Jr.**
**200 Stevens Drive, No 216**
**Richland Washington 99352 (US)**

(74) Representative: **van Berlyn, Ronald Gilbert**
**23, Centre Heights**
**London, NW3 6JG (GB)**

## Description

This invention relates to the on-line determination of the location of a breached fuel assembly in a nuclear reactor having at least three heat transfer loops, and more particularly, to a method and apparatus for determining the fuel assembly in which a breach has occurred from the delayed neutron count rate detected in each loop, and the fractional flow of reactor coolant passing through each fuel assembly which enters each of the heat transfer loops. The invention also covers techniques for reliably separating the delayed neutron count rate from the background count rate and for reducing the uncertainty of the location of the failed fuel assembly.

The fuel for a large nuclear reactor is encased in metal rods which are mounted in groups in fuel assemblies which in turn are massed together to form the reactor core. Reactor coolant in the form of a fluid passed through the core to absorb heat generated by nuclear reactions in the fuel is typically circulated through several external heat transfer loops. The reactor coolant may be ordinary water, heavy water, a gas, or, as in the case of the fast flux test facility operated by the Hanford Engineering Development Laboratory, liquid sodium. In any case, the cladding on the fuel rods is subjected to high temperatures and internal stresses generated as a result of the nuclear reactions in the fuel which can lead to failures in the cladding. Such breaches in the fuel rod cladding introduce fuel into the reactor coolant which carries the contamination throughout the heat transfer loops. Identifying and locating the breached fuel rod in a timely manner is important in order that appropriate action might be taken prior to the time that operational or safety problems are created by the failure.

Various approaches have been taken for detecting ruptured fuel assemblies in a nuclear reactor. Some of these systems such as those shown in U.S. Patent Nos. 3,293,434 ; 3,819,936 ; and 3,786,257 monitor the heat transfer loops to detect increases in radioactivity in the reactor coolant. Systems of this type to date only provide an indication that a rupture has occurred in the fuel rods in one of the assemblies but do not identify the location of the leak. German Patentschrift 158,437 proposes cross correlating readings from an array of in core neutron detectors to identify the location of a fuel leak within the core. Such an in core detector system is expensive and is not a practical solution for existing reactors.

U.S. Patent No. 3,715,270 discloses a sodium-cooled, fast breeder reactor having pipes extending into the top of the core for extracting samples of the coolant flowing through each fuel assembly or group of fuel assemblies. Again, this is a very expensive arrangement and is not suitable for a retrofit.

The fast flux test facility (FFTF) at the Hanford Development Laboratories referred to above, is used to support the development of long-lived fuels and materials for economic commercial breeder reactor systems. In order to establish the alternative capability of fuel and to provide information concerning failure modes and the effects of design modificiations, many of the fuel irradiations will be continued until breaches or loss of cladding integrity occur. To determine operational limits, it will probably be necessary to operate fuel with known breaches in order to determine the tendency for propagation or enlargement of such breaches.

It is important that the identity and location of the breached fuel assembly be established in order that the assembly be removed at the appropriate time. Presently, location of breached fuel in the FFTF is accomplished through the use of a tag gas system. In this system, each fuel pin contains a unique isotopic composition of noble gas (xenon and krypton). When a cladding breach occurs, the gas is released and enters the cover gas. Samples of the cover gas are obtained and analyzed by mass spectrometer to establish the identity of the failed pin. The addition of the tag gas to each individual fuel pin is a relatively expensive effort, and the work required to obtain and analyze a cover gas sample after the failure is time consuming.

The FFTF presently includes a delayed neutron monitoring system which includes detectors adjacent to the heat transfer piping to detect the presence of fission products in the reactor coolant. As in the case of the other systems above which monitor the radioactivity in the coolant circulated through the heat transfer system, the delayed neutron monitoring system only provides an indication that a fuel leak has occurred, but does not provide information on the location of the leak.

Furthermore, present techniques employing delayed neutron monitors are not capable of detecting fuel breaches until considerable contamination has occurred. This is due to the fact that, at the low levels of radioactivity involved, neutron activity is a random event and there is considerable background activity. This background activity has been measured in the FFTF at about 15 to 20 counts per second. Because of the insidious nature of reactor fuel leaks and this considerable background activity, present techniques are not capable of reliably detecting a fuel leak until a considerable period of time has elapsed. By this time, the contamination has spread throughout the primary system.

A principle object of the invention is to provide an improved method and apparatus for locating a leaking fuel assembly in a nuclear reactor without requiring a monitor for each individual fuel assembly.

With this object in view, the invention resides in an on-line method for determining the location of a breached fuel assembly in the core of a nuclear reactor (1) having at least three heat transfer loops (3, 5, 7) in which reactor coolant is circulated through the core, said method characterized by the steps of : generating and storing for each fuel assembly a set of electrical fractional fluid partition signals representative of the fractional amount of coolant flow passing through the fuel assembly which circulates through each of the heat transfer loops (3, 5, 7) ; measuring on an on-line basis the neutron count rate in each heat transfer loop and electrically generating therefrom electrical net delayed neutron count rate signals representative of a portion, if any, of the neutron count rate signal attributable to a breached fuel assembly ; electrically comparing said net delayed neutron count rate signals, if any, with said sets of stored fractional fluid partition signals ; and selecting as a function of said comparison the fuel assembly most likely to be the location of the breached fuel assembly.

The invention also resides in apparatus for determining the location of a breached fuel assembly in the core of a nuclear reactor (1) having at least three heat transfer loops (3, 5, 7) in which reactor coolant passing through the core is circulated, said apparatus characterized by delayed neutron monitoring means (17) in each loop for generating therefor a neutron count rate signal, and a digital computer programmed to : store for each fuel assembly a set of fractional fluid partition signals representative of the fractional amount of the coolant flow passing through the fuel assembly which circulates through each of the heat transfer loops ; to statistically analyze said neutron count rate signals and generate therefrom net delayed neutron count rate signals representative of the portion, if any, of the count rate signals attributable to a breached fuel assembly ; to generate relative net count rate signals for each loop as the ratio between the net neutron count rate signal for that loop to the total net neutron count rate for all loops ; to compare for each fuel assembly the set of stored fractional fluid partition signals with said relative net neutron count rate signals ; and to select a predetermined number of fuel assemblies having the closest such comparisons.

The preferred embodiment of the present invention will be described, by way of example, with reference to the accompanying drawings in which :

Figure 1 is a schematic diagram of a three loop sodium cooled breeder reactor test facility to which the invention is applied ;

Figure 2 is a schematic elevation view, in section, of a delayed neutron monitor device suitable for measuring the delayed neutron count rate in the heat transfer loops of the reactor of Figure 1 ;

Figure 3 is a map of the core of the reactor of the test facility shown in Figure 1 ; and

Figure 4 is a flow chart of a program for carrying out the invention utilizing a programmed digital computer.

The invention will be described as applied to the fast flux test facility (FFTF) at the Hanford Engineering Development Laboratory, Richland, Washington. However, it will be appreciated by those skilled in the art that the invention has application to other types of reactors which have at least three heat transfer loops.

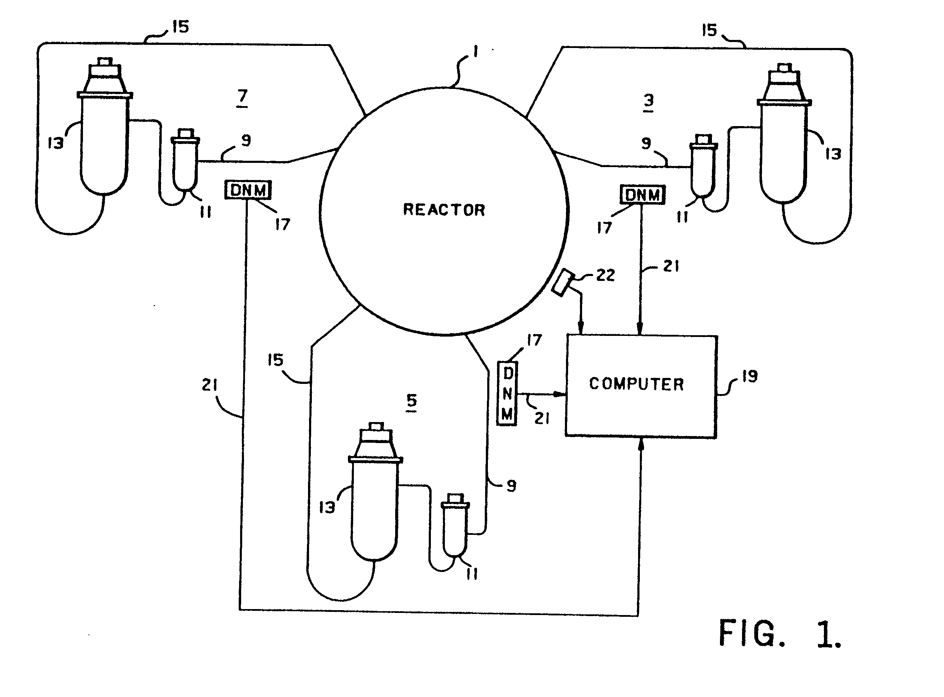

As shown in Figure 1, the FFTF comprises a sodium cooled breeder reactor 1 with three heat transfer loops, 3, 5, and 7. Each of these transfer loops includes hot leg piping 9 with a pump 11 which pumps liquid sodium from the reactor to a heat exchanger 13, and a cold leg pipe 15 through which sodium returns to the reactor. A delayed neutron monitor (DNM) device 17 adjacent to the hot leg pipe 9 in each heat transfer loop, provides to a computer 19 over a lead 21 a signal representative of the delayed neutron count rate in each heat transfer loop. A neutron flux detector system 22 provides the computer 19 with signals from which the power level of the reactor can be measured.

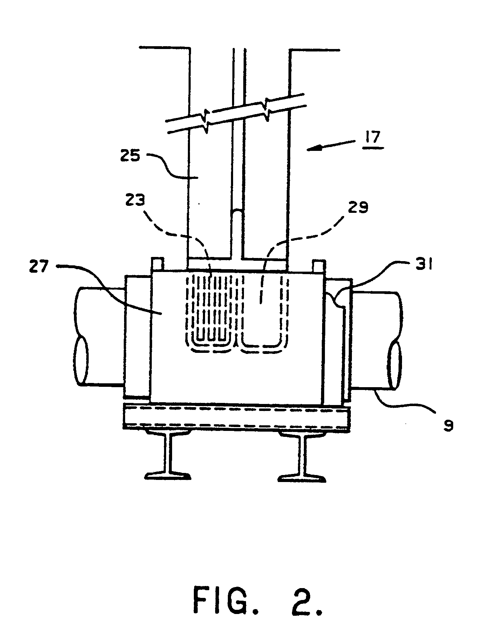

As illustrated schematically in Figure 2, each DNM detector 17 consists of a single boron trifluoride counter 23 inside a thimble 25 within a graphite moderator block 27 placed next to the pipe 9 filled with primary sodium. The thimble 25 exits through the top of a cell (not shown) which houses the heat transport equipment, where a power supply and conditioning electronics (also not shown) are located. A DNM detector 17 also includes a spare thimble 29 and a neutron shield 31 which protects the counter 23 from outside sources of neutrons.

The sequence of events by which the delayed neutron monitors 17 detect a breached fuel assembly is as follows : (1) delayed neutron precursors (fission fragments) recoil into the sodium from fuel that is in contact with the sodium ; (2) the delayed neutron precursors are transported by the sodium from the location where they enter the sodium to the vicinity of the detector(s) 17 in the delayed neutron monitor system ; (3) the neutrons emitted as a result of the decay of the precursors in the vicinity of the detector(s) reach the detector directly or as a result of scattering events ; and (4) the detector system responds to some fraction of the neutrons that reach it.

In addition to delayed neutrons emitted by leaking fuel, there is neutron background activity which is recorded by the delayed neutron monitors 17. It has been determined that this background activity in the FFTF is attributable to photo neutrons ejected from the deuterium contained in the concrete containment walls as a result of 2.75 MeV photons emitted in the decay of the $^{24}$Na and is therefore a function of a reactor power. As mentioned above, this background activity generates a count rate of between 15 and 20 counts per second in the FFTF. In a water cooled reactor, the background count remains stable over time and is not a sensitive function of power level. Actually, the background count rate provides a valuable function. The presence of the background establishes that the counting systems are functioning properly and are capable of detecting the presence of neutrons. If the background signal were to cease, it would be apparent that the system had failed

3

and needed to be repaired. On the other hand, any significant increase in the signal could be related to a breach of the fuel cladding permitting the ejection of fission products into the sodium. The invention includes an improved method, to be discussed below, for detecting the presence of precursors of delayed neutrons in the primary sodium.

The present invention is not only directed to the reliable detection of the existence of a breached fuel assembly, but to the determination of the location of the breach. It is based on the determination that sodium flowing through each fuel assembly is uniquely partitioned into the three heat transfer loops so that by relating the delayed neutron count rates above background (net rates) in each loop to the previously determined partitioning factors for each fuel assembly, the source of a fuel leak can be determined.

Mathematically, the parameters are related as follows :

$$R_{jk} = F_k E \frac{P_{jk} A_p \ell D_j}{2G_j} \left( \sum_{i=1}^{n} \beta_i \lambda_i e - \lambda_i t_{jk} \right) \qquad (1)$$

where $R_{jk}$ = counts per second, the DNM count rate in system (loop) j as a result of a cladding breach or fission fragment release in core position k. In the FFTF j = 1, 2 or 3 with one counter 17 being associated with each of the three primary heat transfer loops 3, 5 and 7.

$F_k$ = fissions per second per cubic centimeter, the (average) fission rate of the fuel located in core position k that is in contact with the primary sodium.

E = cubic centimeters, the effective volume of fuel that is in contact with sodium and capable of emitting fission fragments into the sodium. This factor is given by the triple product s.r.f., where s is the surface area in square centimeters of the fuel in contact with sodium, r is the effective range in centimeters of the fission fragments in the particular type of fuel, and f is a geometry-dependent escape factor, fission fragments escaping per fission event.

$P_{jk}$ = the partition factor or fraction of the fragments from core position k that get to the detector in DNM system j. In the case of the FFTF, the factor is assumed to be closely related to the flow split such that the sum of the three partition factors would be unity. It is also possible teat losses might occur because some of the fission products leaking into the sodium will adhere to components around the products and will not be detected by the DNM, in which case the sum of the partition factors plus losses would equal unity.

$G_j$ = grams of sodium per second, the flow rate in loop j (= 1, 2 or 3) at the FFTF. This parameter is required to obtain the fission fragment density in the sodium.

A = square centimeters, the cross-sectional area of the sodium contained in the pipe adjacent to the DNM detector 17.

$\rho$ = grams of sodium per cubic centimeter, the density of the sodium in the hot leg pipe 9.

$\emptyset$ = the equivalent thermal neutron flux (neutrons per square centimeter per second) at the location of the DNM detector 17 associated with a source of one delayed neutron per second per centimeter of pipe length. In FFTF there is a large pipe full of sodium outside the graphite moderator block that contains the DNM detector 17. This value must be calculated for the specific geometry of the system.

$D_j$ = counts per equivalent thermal neutron per square centimeter, the counting efficiency of the detector 17 in system j including the effect of its associated electronics equipment. Detectors are typically calibrated in a laboratory environment to determine this intrinsic sensitivity. In the field it is necessary to adjust discriminator settings and/or use other electronic techniques to eliminate unwanted background counts associated with gamma rays and/or spurious events, introducing some additional uncertainty in the value.

$\beta_i$ = the delayed neutron fraction in group i for the specific type of fuel that is releasing fragments to the sodium. $\beta_i$ values are significantly different for $^{235}U$ and $^{239}Pu$ and the value for pure isotopes is different than that for mixed oxide fuel containing a number of fissioning isotopes.

$\lambda_i$ = reciprocal seconds, the decay constant associated with group i precursors.

$t_{jk}$ = seconds, the transit time from the occurrence of the fission event in the core that ejected a fission fragment into the sodium at core position k until the sodium and the fragment reach the vicinity of the DNM detector 17 in loop j.

Based on Equation (1) and the definitions given above, it is possible to calculate the response of specific DNM system. Obviously, some of the parameters can be established with a great deal of precision. Among these are the sodium density, $\rho$, the flow rate, $G_j$, and the cross-sectional area of the pipe, A. Other parameters

4

are more difficult to define accurately insofar as their impact on the sensitivity of the DNM system is concerned. These include the delayed neutron precursor parameters $\beta_i$ and $\lambda_i$, the partition factor $P_{jk}$ and the transit time $t_{jk}$, and the fission rate of the material of interest $F_k$. It is significantly more difficult to establish the detector sensitivity, D, and the equivalent thermal neutron flux per unit source strength, $\emptyset$. Finally, it is only possible to calculate the effective volume, E, for simple, known geometries.

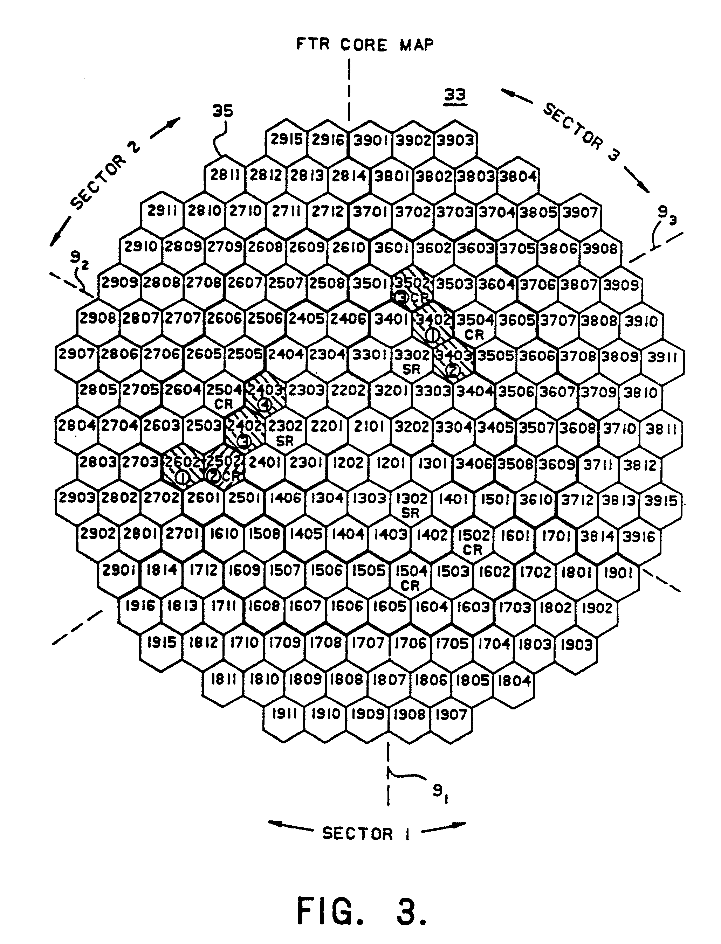

The fluid partition fractions $P_{jk}$ among the three primary loops 3, 5, and 7, in the FFTF were generated from a limited data base obtained from a 0.285 scale model FFTF hydraulic mockup experiment. Figure 3 is a map of the core 33 of the FFTF illustrating the organization of the core locations which are represented by the hexagonal figures. Each core location is identified by a four digit numeral the most significant digit of which identifies one of the three core sectors into which the location falls. The next significant digit identifies the row beginning with the center of the core and working radially outward, and the two least significant digits indicate the position of the core location within the row. Thus, the core location 2916 is the 16th location in the 9th row in the second sector of the core. The sectors are roughly centered on the center lines $9_1$, $9_2$, $9_3$ respectively of the hot legs of the three heat transfer loops. Core locations in rows 1 through 6 are occupied by fuel assemblies 35 while reflector assemblies 37 occupy rows 7 through 9. The letters CR and SR indicate the location of the control rods and shut down rods, respectively.

The mockup data generated from the scale model indicate that the FFTF core has a relatively stable 120 symmetry in fluid partition among the three outlet primary loops. Table 1 summarizes the partition factors for core positions in the FFTF for rows 2 through 6. The quantities $P_1$, $P_2$, and $P_3$ are the partition factors for the primary loops 3, 5, and 7 respectively and satisfy the relationship :

$$\sum_{i=1}^{3} P_i = 1 \qquad\qquad (2)$$

For core position 2101, which is at the center of the core, the partition factor is assumed to be equal for each loop.

## TABLE 1

### SIMULATED FFTF FLUID PARTITION FRACTIONS
### AMONG THREE PRIMARY LOOPS

| Row No. | Core Position | | (Fluid Partition) | | |
|---|---|---|---|---|---|
| For Core Sector #1 | | | Loop #1 | Loop #2 | Loop #3 |
| 2 | 1201 | | 0.46 | 0.26 | 0.28 |
| 2 | 1202 | | 0.46 | 0.28 | 0.26 |
| 3 | 1301 | | 0.47 | 0.10 | 0.42 |
| 3 | 1302 | (SR) | 0.51 | 0.14 | 0.35 |
| 3 | 1303 | | 0.55 | 0.22 | 0.23 |
| 3 | 1304 | | 0.51 | 0.39 | 0.10 |
| 4 | 1401 | | 0.48 | 0.08 | 0.44 |
| 4 | 1402 | | 0.62 | 0.15 | 0.23 |
| 4 | 1403 | | 0.63 | 0.18 | 0.19 |
| 4 | 1404 | | 0.63 | 0.19 | 0.18 |
| 4 | 1405 | | 0.62 | 0.23 | 0.15 |
| 4 | 1406 | | 0.48 | 0.40 | 0.12 |
| 5 | 1501 | | 0.50 | 0.06 | 0.44 |
| 5 | 1502 | (CR) | 0.67 | 0.08 | 0.25 |
| 5 | 1503 | | 0.70 | 0.10 | 0.20 |
| 5 | 1504 | (CR) | 0.74 | 0.11 | 0.15 |
| 5 | 1505 | | 0.75 | 0.13 | 0.12 |
| 5 | 1506 | | 0.74 | 0.16 | 0.10 |
| 5 | 1507 | | 0.70 | 0.21 | 0.09 |
| 5 | 1508 | | 0.67 | 0.26 | 0.07 |
| 6 | 1601 | | 0.54 | 0.02 | 0.44 |
| 6 | 1602 | | 0.67 | 0.03 | 0.30 |
| 6 | 1603 | | 0.77 | 0.04 | 0.19 |
| 6 | 1604 | | 0.80 | 0.05 | 0.15 |
| 6 | 1605 | | 0.86 | 0.06 | 0.08 |
| 6 | 1606 | | 0.85 | 0.10 | 0.05 |
| 6 | 1607 | | 0.80 | 0.16 | 0.04 |
| 6 | 1608 | | 0.77 | 0.19 | 0.04 |
| 6 | 1609 | | 0.67 | 0.30 | 0.03 |
| 6 | 1610 | | 0.54 | 0.44 | 0.02 |

B. <u>For Core Sector #2</u>

| | | | | |
|---|---|---|---|---|
| 1 | 2101 | 0.33 | 0.34 | 0.33 |
| 2 | 2201 | 0.28 | 0.46 | 0.26 |
| 2 | 2202 | 0.26 | 0.46 | 0.28 |
| 3 | 2301 | 0.42 | 0.48 | 0.10 |
| 3 | 2302 (SR) | 0.35 | 0.51 | 0.14 |
| 3 | 2303 | 0.23 | 0.55 | 0.22 |
| 3 | 2304 | 0.10 | 0.51 | 0.39 |
| 4 | 2401 | 0.44 | 0.48 | 0.08 |
| 4 | 2402 | 0.23 | 0.62 | 0.15 |
| 4 | 2403 | 0.21 | 0.63 | 0.16 |
| 4 | 2404 | 0.16 | 0.63 | 0.21 |
| 4 | 2405 | 0.15 | 0.62 | 0.23 |
| 4 | 2406 | 0.12 | 0.48 | 0.40 |
| 5 | 2501 | 0.44 | 0.50 | 0.06 |
| 5 | 2502 (CR) | 0.25 | 0.67 | 0.08 |
| 5 | 2503 | 0.20 | 0.70 | 0.10 |
| 5 | 2504 (CR) | 0.15 | 0.74 | 0.11 |
| 5 | 2505 | 0.12 | 0.75 | 0.13 |
| 5 | 2506 | 0.10 | 0.74 | 0.16 |
| 5 | 2507 | 0.09 | 0.70 | 0.21 |
| 5 | 2508 | 0.07 | 0.67 | 0.26 |
| 6 | 2601 | 0.44 | 0.54 | 0.02 |
| 6 | 2602 | 0.30 | 0.67 | 0.03 |
| 6 | 2603 | 0.19 | 0.77 | 0.04 |
| 6 | 2604 | 0.15 | 0.80 | 0.05 |
| 6 | 2605 | 0.08 | 0.86 | 0.06 |
| 6 | 2606 | 0.05 | 0.85 | 0.10 |
| 6 | 2607 | 0.04 | 0.80 | 0.16 |
| 6 | 2608 | 0.04 | 0.77 | 0.19 |
| 6 | 2609 | 0.03 | 0.67 | 0.30 |
| 6 | 2610 | 0.02 | 0.54 | 0.44 |

## C.   For Core Sector #3

| | | | | | |
|---|---|---|---|---|---|
| 2 | 3201 | | 0.26 | 0.28 | 0.46 |
| 2 | 3202 | | 0.28 | 0.26 | 0.46 |
| | | | | | |
| 3 | 3301 | | 0.10 | 0.42 | 0.48 |
| 3 | 3302 | (SR) | 0.14 | 0.35 | 0.51 |
| 3 | 3303 | | 0.22 | 0.23 | 0.55 |
| 3 | 3304 | | 0.39 | 0.10 | 0.51 |
| | | | | | |
| 4 | 3401 | | 0.08 | 0.44 | 0.48 |
| 4 | 3402 | | 0.15 | 0.23 | 0.62 |
| 4 | 3403 | | 0.16 | 0.21 | 0.63 |
| 4 | 3404 | | 0.21 | 0.16 | 0.63 |
| 4 | 3405 | | 0.23 | 0.15 | 0.62 |
| 4 | 3406 | | 0.40 | 0.12 | 0.48 |
| | | | | | |
| 5 | 3501 | | 0.06 | 0.44 | 0.50 |
| 5 | 3502 | (CR) | 0.08 | 0.25 | 0.67 |
| 5 | 3503 | | 0.10 | 0.20 | 0.70 |
| 5 | 3504 | (CR) | 0.11 | 0.15 | 0.74 |
| 5 | 3505 | | 0.13 | 0.12 | 0.75 |
| 5 | 3506 | | 0.16 | 0.10 | 0.74 |
| 5 | 3507 | | 0.21 | 0.09 | 0.70 |
| 5 | 3508 | | 0.26 | 0.07 | 0.67 |
| | | | | | |
| 6 | 3601 | | 0.02 | 0.44 | 0.54 |
| 6 | 3602 | | 0.03 | 0.30 | 0.67 |
| 6 | 3603 | | 0.04 | 0.19 | 0.77 |
| 6 | 3604 | | 0.05 | 0.15 | 0.80 |
| 6 | 3605 | | 0.06 | 0.08 | 0.86 |
| 6 | 3606 | | 0.10 | 0.05 | 0.85 |
| 6 | 3607 | | 0.16 | 0.04 | 0.80 |
| 6 | 3608 | | 0.19 | 0.04 | 0.77 |
| 6 | 3609 | | 0.30 | 0.03 | 0.67 |
| 6 | 3610 | | 0.44 | 0.02 | 0.54 |

Delayed neutron precursors from a failed fuel pin will be carried by the primary sodium from the core to the three outlet loops and subsequently past the DNM detectors 17. The split of the precursors among the three loops is assumed to be directly related to the fluid partition factors. Therefore, the delayed neutron count rates in each of the three loops will be related to the fluid partitions, as described in Equation (1).

Using the FFTF in-core fluid partition fractions, a method has been developed to locate a failed fuel assembly by comparing the relative count rates with the partition factors using the principle of domains of proximity. This method deals with a direct comparison between the relative delayed neutron count rates and the corresponding fluid partitions. We define the relative delayed neutron count rate $R_i$ as :

$$R_i = \frac{C_i}{\sum\limits_{i=1}^{3} C_i} \tag{3}$$

where $C_i$ is the observed net delayed neutron count rate from the ith loop. These relative count rates satisfy the relation :

$$\sum_{i} R_i = 1 \qquad\qquad (4)$$

Equations (2) and (4) are compatible based on the assumption that each DNM count rate response is directly proportional to the precursor inventory in the respective loop.

This method requires that we calculate and compare the domains of proximity (i.e., the closeness) of the fluid partitions of a suspected core position to the observed relative count rates in a three dimensional space defined by the set {R}. The domain is defined as :

$$d_k = \left[ \sum_{i} (R_i - P_{ik})^2 \right]^{\frac{1}{2}} \qquad\qquad (5)$$

The quantity d measures the "closeness" of the point $(P_{1k}, P_{2k}, P_{3k})$, to the point $(R_1, R_2, R_3)$ in a functional space defined by the set {R}. The smaller the value of $d_k$, the closer is the core position "k" to having the fluid partition associated with the observed relative delayed neutron count rates.

The application of this method is demonstrated by the following example. Assume that the DNM system detects a set of net delayed neutron count rates $(C_1, C_2, C_3)$ equal to (65, 100, 275). From Equation (3) one obtains :

$$(R_1, R_2, R_3) = (0.148, 0.227, 0.625) \quad (6)$$

From Table 1, one finds all sets of $(P_1, P_2, P_3)$ that are close to the set of $(R_1, R_2, R_3)$ by comparing the $d_k$'s. The results of such calculations are summarized in Table 2.

# TABLE 2

DEGREE OF PARTITION - DOMAIN OF PROXIMITY, EXAMPLE NO. 1

| DN - COUNTS | | | | SUSPECTED CORE POSITION | 3402 | 3403 | 3502 |
|---|---|---|---|---|---|---|---|
| $C_i$, CPS | | $R_i$ | | $P_i$ | | | |
| $C_1$ | 65 | $R_1$ | 0.148 | $P_1$ | 0.15 | 0.16 | 0.08 |
| $C_2$ | 100 | $R_2$ | 0.227 | $P_2$ | 0.23 | 0.21 | 0.25 |
| $C_3$ | 275 | $R_3$ | 0.625 | $P_3$ | 0.62 | 0.63 | 0.67 |
| $D_K$ | | | | | 0.0094 | 0.0345 | 0.1184 |
| ORDERS BY COMPARISON | | | | | 1 | 2 | 3 |

For the three core positions having the closest match to the relative count rate, the domains of proximity have the following sequence :

$$d_{3402} < d_{3403} < d_{3502} \quad (7)$$

Thus, the magnitude of $d_k$ establishes the relative ranking or likely order that the leaking assembly is in a given core location. This ranking could be used with other available information to pinpoint the failure. For instance, based upon the known order of replacement of the fuel assemblies and the past operating history of the reactor, some fuel assemblies have a higher probability of developing a leak than others. By identifying these fuel assemblies and comparing this list with a selected number of fuel assemblies having the lowest domains of proximity, the most likely location of the fuel leak can be singled out. Of course, the more accurate the partition factor data the less such correlation is needed to provide reliable indications of the source of the leak.

The method introduced here is simple to use and the results will be unique if the partition data base is accurate. The method was used to work out additional examples in which random count rates did not provide such excellent agreement as in the example of Table 2. Results of these examples are summarized in Tables 3 and 4. As anticipated, all the suspected core positions for a given case are neighboring core positions as shown in Figure 2 by the cross hatching. This should be the expected situation for the triangulation method to provide reasonable results.

# TABLE 3

## FAILED FUEL ASSEMBLY LOCATION, EXAMPLE NO. 2

| DN - COUNTS | | | | SUSPECTED CORE POSITION | 2402 | 2403 | 2502 • | 2602 |
|---|---|---|---|---|---|---|---|---|
| $C_i$, CPS | | $R_i$ | | $P_i$ | | | | |
| $C_1$ | 250 | $R_1$ | 0.32 | $P_1$ | 0.23 | 0.21 | 0.25 | 0.30 |
| $C_2$ | 500 | $R_2$ | 0.65 | $P_2$ | 0.62 | 0.63 | 0.67 | 0.67 |
| $C_3$ | 25 | $R_3$ | 0.03 | $P_3$ | 0.15 | 0.16 | 0.08 | 0.03 |
| $D_K$ | | | | | 0.153 | 0.172 | 0.054 | 0.028 |
| ORDERS BY COMPARISON | | | | | 3 | 4 | 2 | 1 |

• A CR POSITION

# TABLE 4

## FAILED FUEL ASSEMBLY LOCATION, EXAMPLE NO. 3

| DN - COUNTS | | | | SUSPECTED CORE POSITION | 3201 | 3202 | 3303 | 3301 |
|---|---|---|---|---|---|---|---|---|
| $C_i$, CPS | | $R_i$ | | $P_i$ | | | | |
| $C_1$ | 350 | $R_1$ | 0.23 | $P_1$ | 0.26 | 0.28 | 0.22 | 0.10 |
| $C_2$ | 500 | $R_2$ | 0.33 | $P_2$ | 0.28 | 0.26 | 0.23 | 0.42 |
| $C_3$ | 650 | $R_3$ | 0.44 | $P_3$ | 0.46 | 0.46 | 0.55 | 0.48 |
| $D_K$ | | | | | 0.062 | 0.088 | 0.149 | 0.163 |
| ORDERS BY COMPARISON | | | | | 1 | 2 | 3 | 4 |

Determimation of the existence of a fuel leak and its location is performed by the digital computer 19 which receives the delayed neutron count rates from the detectors 17. The software for the digital computer 19 consists of a multi-function calculational program, a control program and a utility file-initialization program. The software performs the necessary functions to complete complex statistical analysis of the delayed neutron monitor background count rates, primary $^{24}$Na activity as a function of reactor power history, the net delayed neutron count rates, and the triangulation calculation for failed fuel location. The analysis results are used to provide reactor operating information in the event of fuel failure to minimize or limit possible contamination of 'the primary sodium coolant system in the FFTF.

The multi-function calculational program is the heart of the software subsystem. This program samples and validates data, performs complex statistical calculations, provides reactor operations safeguard warnings in the case of a detected fuel failure, and performs a triangulation calculation that attempts to identify the most likely core position for a failed fuel assembly based on current reactor information. The basic functiom of the main program is straightforward. It continuously calls a STAT subroutine to sample data and perform the statistical analysis, prints a hard copy report of the results and then starts the data sampling over again. If net delayed neutron activity is detected, the subroutine TRIANG is called to perform the triangulation calculation and data sampling is immediately resumed without any delay. A set of 180 data samples is taken for statistical analysis as long as no net delayed neutron activity is detected. However, when net delayed neutron activity is present, only 90 data samples are collected each time for triangulation calculation.

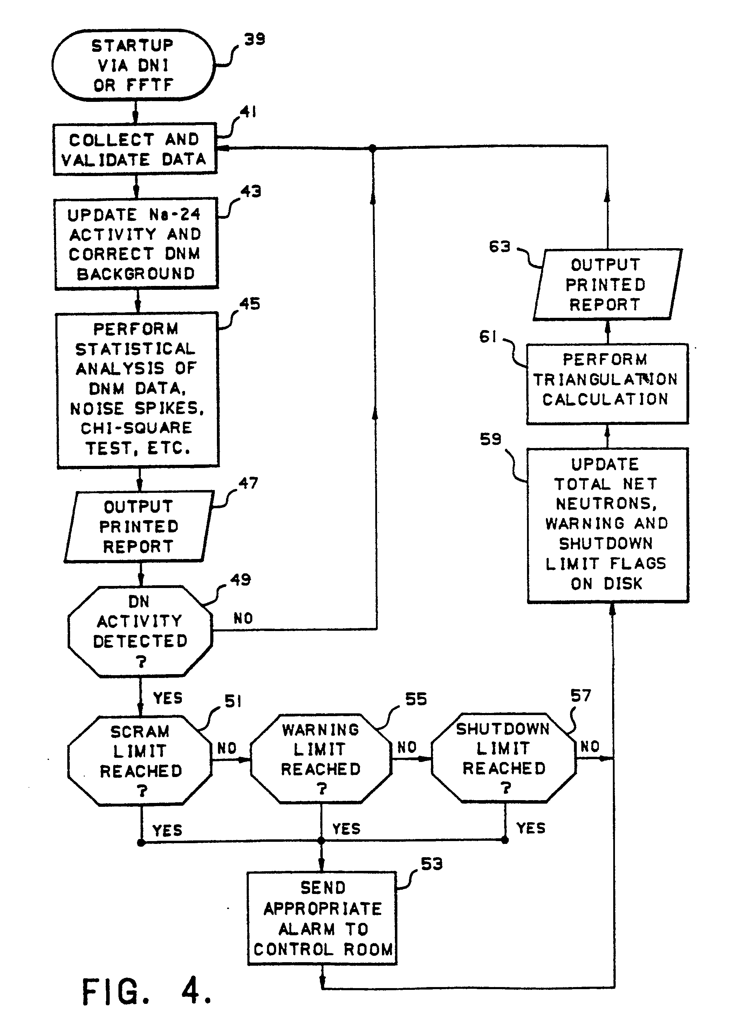

A flowchart of the multi-function calculation program is illustrated in Figure 4. As indicated in block 39, the program is called up by the control program. The STAT subroutine which includes the blocks 41, 43, 45, 47 and 49 in Figure 4 is called from the main program to sample the delayed neutron monitor count rates, reactor power, primary sodium flow rates, $^{133}$Xe and a $^{135m}$Xe activities in the reactor cover gas as indicated in block 41. Data are sampled every ten seconds. Validation of sample data is performed as the data are collected. A flag associated with each sampled variable is checked to ensure that each variables processing and I/O (input/output) are turned on, that the variable is not noisy, and that its value is not outside its validity limits. Any data point meeting these criteria is considered "good" data. If "bad" data are detected, it will be indicated in the hard copy printout. Regardless of whether or not bad data are detected, the calculations are always performed.

After data sampling is completed, statistical calculations are performed on the DNM count rates and reactor power. The delayed neutron monitor background count rate is determined in block 43 from the $^{24}$Na activity. For each DNM loop the $^{24}$Na specific activity in terms Ci/gm is updated according to :

$$TACT - 0.0108\ P\ (1-e^{-\lambda t}) + ACT\ e^{-\lambda t} \quad (8)$$

where TACT = present updated primary $^{24}$Na specific activity in Ci/gm ;

P = reactor power as a fraction of full power ;

$\lambda$ = $^{24}$Na decay constant, 0.04615 hr$^{-1}$ ;

t = time interval equal to 30 or 15 minutes ; and

ACT = previous $^{24}$Na specific activity in Ci/gm.

Using the updated $^{24}$Na activity, the corrected DNM backgrounds DBP (1) are calculated.

$$DBP(I) = \frac{TACT}{ACT}\ DBI(I) \quad (9)$$

where DBI(I) is the previously established DNM count rate background of loop I.

Once the DNM background has been determined, as above for a sodium cooled reactor or by using a stored value for water cooled reactors, statistical analysis is performed on the count rate to determine the presence of leaked fuel with a high degree of confidence. The difference between the measured count rate and the background count rate, which is the net count rate, represents delayed neutrons resulting from leaked fuel. The difficulty is that at the low levels of radioactivity involved, delayed neutron release is a random event. In prior art systems, a count rate set point was selected at a high enough level to assure that a high count rate was a result of leaked fuel and not a statistical event. Since fuel leaks typically are insidious in nature, this meant that the fuel leak could not be detected until a long interval of time had elapsed and the leak had become sizable.

We have created what we call Z-score values which detect with a high degree of confidence very low levels of leaked fuel. These values are calculated as follows :

$$ZZ(I) = \frac{DM(I) - DBP(I)}{\sqrt{SM(I)^2 + SMI(I)^2}} \qquad (10)$$

where DM(I) is the average measured count rate, SM(I) is the standard deviation of the mean for the observed data, and SMI(I) is the standard deviation of mean of the previous data set. The Z-score value for each loop is then compared with a limiting value such as the following :

$$Z(I) = \frac{1.50}{SM(I)} \quad (11)$$

If ZZ(I) has a value which is more than or equal to Z(I), the STAT subroutine sets a delay neutron indication flag, IDNF(I) equal 1, indicating that statistically significant delayed neutrons of about two counts per second above the corrected background had been detected for loop I. If ZZ(I) is less than Z(I), the STAT subroutine checks for possible noise spikes in the DNM signal, and if :

$$DN(I,J) \; DBP(I) + 5.0 * SS(I) \quad (12)$$

where DN(I,J) is a sampled DNM count rate and SS(I) is the standard deviation of the sample, STAT sets the spike flag, ISP(I) = 1, signifying that a spike has been detected in loop I.

If no net delayed neutron count is detected (i.e., IDNF(I = 0)), the STAT subroutine will perform a $\chi^2$ test for each of the three DNM counting systems. For radiation detection, the counting statistics are expected to follow the Poisson's distribution. Accordingly, $\chi^2$ calculated by :

$$x^2(I) = \frac{\sum\limits_{j=1}^{180} [DN(I,j) - DM(I)]^2}{DM(I)} \qquad (13)$$

The upper and lower limits of the $\chi^2$ test have been set to provide a 99% confidence level with 179 degrees of freedom.

If $\chi^2(I)$ is greater than the upper limit, the $\chi^2$ test for the counting system of loop I is not passed, indicating some abnormal performance of loop 1. If $\chi^2(I)$ is less than lower limits, the $\chi^2$ test for the counting system of loop I is also not passed, indicating that the statistics of the system I are too good to believe at the confidence level. When the $\chi^2(I)$ is within the limits, the $\chi^2$ test for loop I is considered to be passed, indicating that the counting system of loop I is performing properly.

The results of the statistical analysis are printed in hard copy as indicated in block 47. This report includes the status of tie flags, the result of the $\chi^2$ tests if performed, and if a spike is detected, the entire data set for the affected loop.

If no net delayed neutron activity indicative of a fuel leak is detected, the program, as indicated in block 49, returns to block 41 in preparation for the next data sampling cycle.

If any of the three delayed neutron flags is not 0, ie., IDNF(I) = Ø, the TRIANG subroutine is called from the MAIN program. The TRIANG subroutine calculates the net delayed neutron count rates by subtracting the $^{24}$Na activity corrected background count rates from the DNM detected count rates. The net DNM count rates from the loops for a given time, SDN(J), are then computed and compared with a preset limit, such as 600 cps, in block 51. If SDN(J) has a value which is equal to or more than 600 cps, a flag is set causing an alarm signal to be sent, as indicated in block 53, to the control room indicating that a reactor scram is required.

Simultaneously, the total accumulated net delayed neutron counts, TNN, is integrated and stored. If TNN is greater than a preset limit of, for example 5,000 counts, as indicated in block 55, another flag is set causing an alarm to be sent to the control room as indicated in block 53 signifying that the fission products released from a failed fuel assembly have reached a warning level, and preparation for a reactor shutdown should begin.

The program continuously integrates the total delayed neutron counts as long as IDNF(I) = Ø. If TNN ever becomes equal to or greater than a preset limit, of for instance 150,000 counts, another flag is set as indicated in block 57 causing an alarm to be sent to the control room as indicated in block 53 for a reactor shutdown to protect the primary sodium system from severe fission product contamination.

The three preset flag limits (SDN(J) more than or equal to 600 cps, TNN more than or equal to 5,000 counts, and TNN more than or equal to 150,000 counts) can be revised up or down as necessary as dictated by the effects on the plant of previous cladding failures. Whether or not any flag limits are reached, the totals of the net delayed neutron count rate and the accumulated net delayed neutron counts are updated in disk memory as indicated in block 59 before the triangulation calculations are made in block 61. The triangulation calculations include calculation of the relative net delayed neutron count rates, $R_I$, as discussed above, for the three DNM loops. These relative count rates are used to compute the domains of proximity for each core position by :

$$DK(I) = SQRT \ [(RG(2) - PF1)^2 + (RC(3) - PF2)^2 + (RC(1) - PF3)^2] \quad (14)$$

where the quantities RC(1), RC(2) and RC(3) are the relative count rates and PF1, PF2 and PF3 are the FFTF core partition fractions for core sectors 1, 2 and 3, respectively (see Table 1 for the partition factors). The domains of proximity values are sorted into ascending order for printing as indicated in block 63 before the program returns to block. 41 in preparation for the next data sampling cycle.

There are a number of limitations and uncertainties associated with the use of the DNM system count rates for locating the breached assembly within the core. The primary sources of uncertainty are partition function accuracy, count rate statistics accuracy, and variations in the transit time for leaked fuel to reach the three counters.

The accuracy of the values in the partition function table (Table 1) is unknown. Although it is based on hydraulic mockup data for FFTF, the extrapolation and interpolation of the data to all core locations introduces a significant uncertainty. In addition, it is considered very probable that the partition values might vary slightly from one cycle to another. This is so because of the loading changes, the changes in core pressure drops and flow splits, the re-seating of the instrument trees, distortion of core components as a result of radiation damage and temperature gradients, and any potential imbalances in loop flow rates.

The partition functions are also time-averaged values. Although average values are expected to exist, there are undoubtedly both short-term and long-term variations in the flow split from a given core position to those variations and how they might influence the DNM count rates. Until operational data are obtained, there is no basis for providing an estimate of the uncertainty that this might introduce into any determination of the location of a breached assembly.

In the examples that were given above, it was assumed that both the partition functions and the count rates were precisely known. As discussed alive, there will be an uncertainty in the partition function. There will also be an uncertainty in the derived count-rate-ratios. The magnitude of this uncertainty will depend on the count rate. For small breaches, where the signal is only slightly larger than the background, the uncertainty introduced by the count-rate-ratios will be significant. For large breaches, where the count rates are quite high, the uncertainty associated with the ratios will be small. These will need to be evaluated on a case-by-case basis. The present invention, however, provides significant improvement over prior techniques for detecting the presence of leaked fuel.

The partition functions were developed on the basis of hydraulic core mockup data that provided the flow fractions from a given core position to each loop. The relative response of the DNM counters 17 is also dependent on the length of time that occurs between the fission event that ejects the precursor into the sodium and the time that the precursor reaches the DNM counter (see Equation 1). Any significant time differences among the loops for a given core position would introduce a bias into the comparison of count-rate-ratios and partition functions. In the examples presented above this potential bias was ignored.

An appropriate correction for the fluid transit time can be developed based on the characteristic equation for operation of the system (Equation 1).

The relative net delayed neutron count rate $R_1$, as defined by Equation (3), can be combined with Equation (1) and written in the form :

$$R_1 = \frac{C_1}{\sum_j C_j} = P_1 \left[ P_1 + P_2 \frac{\sum_i b_i \lambda_i e^{-\lambda_i t_2}}{\sum_i \beta_i \lambda_i e^{-\lambda_i t_1}} + P_3 \frac{\sum_i \beta_i \lambda_i e^{-\lambda_i t_3}}{\sum_i b_i \lambda_i e^{-\lambda_i t_1}} \right]^{-1} \quad (15)$$

where it is assumed that the parameters $G_j$ and $(Ap \ \emptyset D_j)$ are essentially equal for each of the three loops and therefore cancel out. For simplicity, this can be written in the form :

$$R_1 = p_1 [p_1 + p_2 f(t_2,t_1) + p_3 f(t_3,t_1)]^{-1} \quad (16)$$

where

$$f(t_i, t_j) = \frac{\sum_{\ell} \beta_\ell \lambda_\ell e^{-\lambda_p t_i}}{\sum_k \beta_k \lambda_k e^{-\lambda_k t_j}} = \frac{F(t_i)}{F(t_j)} \quad (17)$$

Similar equations can be generated for $R_2$ and $R_3$. These equations include the required corrections for the differences in fluid transit time from any given core location to the DNM detectors 17.

To provide an estimate of the relative importance of the transit time correction, it is convenient to express the transit time as the sum of two components :

$$t_i = t_o + t_i.$$

where $t_o$ denotes the common fluid transit time from the "mixed" sodium in the pool to the location of the DNM detectors (assumed to be equal for each loop), and $t_i$ is the transit time from a given core position to this common pool position. A crude estimate of $t_i$ has been made using an average radial sodium velocity across the core of 1.5 feet per second based on the hydraulic core mockup data.

Preliminary calculations of the effect of transit time were made based on calculated differences in $t_i$ for various core positions. These calculations indicate that the time delay effect will be relatively small even though significant. Table 5 presents a breakdown of the relative response of the DNM system to delayed neutron precursors from the fast-neutron induced fission of $^{239}Pu$ using the conventional six delayed neutron group formalism. It can be seen that most of the response is expected to be associated with the 22 second group. If this is true, time differentials of the order of one or two seconds will not be important. However, time differentials of this magnitude will strongly influence the contribution of the shorter half-life groups, such as the 5.3 second group.

## TABLE 5

### CALCULATED RELATIVE SENSITIVITY OF FFTF DNM SYSTEM

| Group Number | Half-Life Seconds | DNM Response (Percent) |
|---|---|---|
| 1 | 53.8 | 7.3 |
| 2 | 22.3 | 77.7 |
| 3 | 5.3 | 14.8 |
| 4 | 2.1 | 0.2 |
| 5 | 0.55 | 0.0 |
| 6 | 0.22 | 0.0 |

Although the conventional six-delayed neutron group formalism was used in this example, it would also be possible to use more detailed delayed neutron precursor data. However, this is not expected to influence the accuracy of the system for locating breached fuel. The yield data are expected to be more important in establishing the sensitivity of the delayed neutron counting system than in directly influencing the location capability.

No attempt was made to combine the three major uncertainties discussed above to establish the impact on the location capability of the method. This has not been possible because of the unknown uncertainty associated with the partition function, which is expected to be a major source of uncertainty in application of the method.

The partition function table can be used in conjunction with tag gas to provide a greater degree of assurance that the exact location of a breached assembly has been identified. In the absence of a tag gas system, alternate information could be used with the partition table results to confirm the breach location.

One obvious method of confirmation would be based on failure probability. Cladding breaches can be expected to occur early in life as a result of fabrication defects or at end of life. Within the relatively small cluster of assemblies that are established as suspect based on the partition function method, a second ranking can be generated based on the operating history of the assemblies. If the partition function ranking and the failure probability ranking coincide, there is a strong likelihood that the breach was correctly identified.

At the very minimum the partition table method establishes a priority order for removing assemblies from the core prior to restarting the reactor. It is also possible that additional information might be obtained by control rod movement. This method might only be effective in differentiating between a pair of assemblies where one was adjacent to the control rod and the other was farther away. If the partition table method actually provides useful location information, global flux tilting is not expected to be a particularly useful method of confirming the location of the breach.

The invention has been used to successfully identify a breached fuel assembly in the FFTF. With more experience, it will be possible to refine the partition factors, and thus enhance the reliability of the technique.

## Claims

1. An on-line method for determining the location of a breached fuel assembly in the core of a nuclear reactor (1) having at least three heat transfer loops (3, 5, 7) in which reactor coolant is circulated through the core, said method characterized by the steps of :

generating and storing for each fuel assembly a set of electrical fractional fluid partition signals representative of the fractional amount of coolant flow passing through the fuel assembly which circulates through each of the heat transfer loops (3, 5, 7) ;

measuring on an on-line basis the neutron count rate in each heat transfer loop and electrically generating therefrom electrical net delayed neutron count rate signals representative of a portion, if any, of the neutron count rate signal attributable to a breached fuel assembly ;

electrically comparing said net delayed neutron count rate signals, if any, with said sets of stored fractional fluid partition signals ; and

selecting as a function of said comparison the fuel assembly most likely to be the location of the breached fuel assembly.

2. The method of claim 1 wherein said step of comparing is characterized by electrically generating relative net delayed count rate signals for each heat transfer loop as the ratio of the net delayed count rate signal for the loop divided by the sum of the net delayed count rate signals for all of the loops, and electrically generating an index signal associated with each fuel assembly which is function of the difference between the relative net delayed neutron count rate for each heat transfer loop and the corresponding fractional fluid partition factor signal.

3. The method of claim 2 wherein said step of electrically generating said index signal for said fuel assembly is characterized by electrically generating a domain of proximity index as the square root of the sum of the squares of the differences between the relative net delayed neutron count rate signal for each heat transfer loop and the fractional fluid partition signal for that loop stored for that fuel assembly.

4. The method of claim 3 wherein the step of selecting is characterized by selecting the fuel assembly having the smallest index signal as the most likely location of the fuel breach.

5. The method of claim 1 wherein the step of selecting is characterized by selecting the fuel assembly having the set of fractional fluid partition signals which most closely matches the net delayed neutron count rate signals as the location of the fuel breach.

6. The method of claim 1 wherein the comparing step is characterized by generating an index signal for each fuel assembly having a magnitude which is inversely proportional to the match of the associated fractional fluid partition signals with the net delayed neutron count rate signals, and

ranking said fuel assemblies in ascending order of the magnitude of the said index signals, designating a predetermined number of the highest ranked fuel assemblies ; independently of the delayed neutron count rate, identifying fuel assemblies likely to develop fuel breaches, and selecting from such designated fuel assemblies the highest ranked, identified fuel assembly as the most likely location of the fuel breach.

7. The method of claim 2 wherein the step of generating said index signal for each fuel assembly is characterized by adjusting the relative net delayed neutron count rate signals for the reactor coolant transit time between the fuel assembly and the location in each heat transfer loop where said delayed neutron count rate is measured.

8. Apparatus for determining the location of a breached fuel assembly in the core of a nuclear reactor (1) having at least three heat transfer loops (3, 5, 7) in which reactor coolant passing through the core is circulated, said apparatus characterized by

delayed neutron monitoring means (17) in each loop for generating therefor a neutron count rate signal, and

a digital computer programmed to :

store for each fuel assembly a set of fractional fluid partition signals representative of the fractional amount of the coolant flow passing through the fuel assembly which circulates through each of the heat transfer loops; to statistically analyze said neutron count rate signals and generate therefrom net delayed neutron count rate signals representative of the portion, if any, of the count rate signals attributable to a breached fuel assembly; to generate relative net count rate signals for each loop as the ratio between the net neutron count rate signal for that loop to the total net neutron count rate for all loops ; to compare for each fuel assembly the set of stored fractional fluid partition signals with said relative net neutron count rate signals ; and to select a predetermined number of fuel assemblies having the closest such comparisons.

## Ansprüche

1. Ein On-Line-Verfahren zur Bestimmung der Stelle eines schadhaften Brennsatzes im Kern eines Kernreaktors (1) mit mindestens drei Wärmetauscherschleifen (3, 5, 7), in denen Reaktorkühlmittel durch den Kern zirkuliert, **dadurch gekennzeichnet,** daß für jeden Brennsatz

ein Set elektrischer Teilflüssigkeitsverteilungssignale erzeugt und gespeichert wird, die für den Teil des durch den Brennsatz fließenden Kühlmittels, das durch jede der Wärmetauscherschleifen (3, 5, 7) zirkuliert, kennzeichnend sind ;

die Neutronenzählrate in jeder Wärmetauscherschleife auf einer On-Line-Basis gemessen wird und davon elektrisch nettoverzögerte Neutronenzählraten-Signale erzeugt werden, die für einen Teil, falls vorhanden, des Neutronenzählraten-Signals kennzeichnend sind, das auf einen schadhaften Brennsatz zurückzuführen ist :

die nettoverzögerten Neutronenzählraten-Signale, falls vorhanden, mit den Sets gespeicherter Teilflüssigkeitsverteilungs-Signale elektrisch verglichen werden ; und

als eine Funktion dieses Vergleiches der Brennsatz ausgewählt wird, in dem am wahrscheinlichsten die schadhafte Stelle zu finden ist.

2. Verfahren nach Anspruch 1, worin der Schritt des Vergleichens dadurch gekennzeichnet ist, daß relative nettoverzögerte Zählraten-Signale für jede Wärmetauscherschleife erzeugt werden als das Verhältnis des nettoverzögerten Zählraten-Signals für die Schleife geteilt durch die Summe der nettoverzögerten Zählraten-Signale für alle Schleifen, um ein Indexsignal erzeugt wird, das eine Funktion der Differenz zwischen der relativen nettoverzögerten Neutronenzählrate für jede Wärmetauscherschleife und dem entsprechenden Teilflüssigkeitsverteilungs-Signal ist.

3. Verfahren nach Anspruch 2, worin die elektrische Erzeugung des Indexsignals für jeden Brennsatz dadurch gekennzeichnet ist, daß ein Näherungsindexbereich erzeugt wird als Quadratwurzel der Summe der Quadrate der Differenzen zwischen dem Signal der relativen nettoverzögerten Neutronenzählrate für jede Wärmetauscherschleife und dem Signal der Teilflüssigkeitsverteilung für die gespeicherte Schleife für den Brennsatz.

4. Verfahren nach Anspruch 3, worin der Schritt der Auswahl dadurch gekennzeichnet ist, daß der Brennsatz mit dem kleinsten Indexsignal als die wahrscheinlichste schadhafte Stelle ausgewählt wird.

5. Verfahren nach Anspruch 1, worin der Schritt der Auswahl dadurch gekennzeichnet ist, daß der Brennsatz als schadhaft ausgewählt wird, dessen Teilflüssigkeitsverteilungs-Signale mit den nettoverzögerten Neutronenzählraten-Signalen am besten koinzidieren.

6. Verfahren nach Anspruch 1, worin der Schritt des Vergleichens dadurch gekennzeichnet ist, daß ein Indexsignal für jeden Brennsatz erzeugt wird, dessen Höhe umgekehrt proportional ist der Koinzidienz der zugeordneten Teilflüssigkeitsverteilungs-Signale mit den nettoverzögerten Neutronenzählratensignalen, und

die Brennsätze in ansteigender Reihenfolge der Höhe der Indexsignale eingestuft werden, eine vorbestimmte Anzahl der am höchsten eingestuften Brennsätze bezeichnet wird ; unabhängig von der verzögerten Neutronenzählrate, wahrscheinlich Schadstellen bildende Brennsätze identifiziert werden und von den bezeichneten Brennsätzen der höchst eingestufte ausgewählt und als der Brennsatz mit der wahrscheinlichsten Schadstelle identifiziert wird.

7. Verfahren nach Anspruch 2, worin der Schritt des Erzeugens des Indexsignals für jeden Brennsatz dadurch gekennzeichnet ist, daß die relativen nettoverzögerten Neutronenzählraten-Signale für die Reaktorkühlmittel-Durchlaufzeit zwischen dem Brennsatz und der Stelle in jeder Wärmetauscherschleife, wo die verzögerte Neutronenzählrate gemessen ist, eingestellt werden.

8. Vorrichtung zum Ermitteln der Stelle eines schadhaften Brennsatzes im Kern eines Kernreaktors (1) mit mindestens drei Wärmetauscherschleifen (3, 5, 7), durch die Reaktorkühlmittel durch den Kern zirkuliert, **dadurch gekennzeichnet,** daß in jede Schleife ein verzögerter Neutronenmonitor (17) angeordnet ist, um für die Schleife ein Neutronenzählraten-Signal zu erzeugen, und

ein Digitalcomputer programmiert ist, um für jeden Brennsatz ein Set von Teilflüssigkeitsverteilungs-Signalen zu speichern, der für den Teil des durch den Brennsatz fließenden Kühlmittels kennzeichnend ist, das durch jede Wärmetauscherschleife zirkuliert ; statistisch die Neutronenzählraten-Signale zu analysieren und davon nettoverzögerte Neutronenzählraten-Signale zu erzeugen, die für den Teil, wenn vorhanden, der Zählraten-Signale kennzeichnend sind, die von einem schadhaften Brennsatz herrühren ; relativ nettoverzögerte Zählraten-Signale für jede Schleife zu erzeugen als das Verhältnis zwischen dem nettoverzögerten Neutronenzählraten-Signal für jede Schleife zur gesamten Nettoneutronenzählrate für alle Schleifen ; für jeden Brennsatz den Satz der gespeicherten Bruchteil-Strömungsverteilungs-Signale mit den relativen Nettoneutronenzählraten-Signalen zu vergleichen ; und eine vorbestimmte Anzahl Brennsätze auszuwählen, die die engsten solcher Vergleiche aufweisen.

## Revendications

1. Procédé exécuté en direct pour localiser un assemblage combustible fracturé dans le coeur d'un réacteur nucléaire (1) comportant au moins trois boucles de transfert de chaleur (3, 5, 7) dans lesquelles du fluide de refroidissement circule à travers le coeur, ledit procédé étant caractérisé par les étapes consistant à :

générer et emmagasiner pour chaque assemblage combustible une série de signaux électriques de répartition de fluide fractionnaire représentatifs de la fraction de flux de fluide de refroidissement passant à travers l'assemblage combustible qui circule à travers chacune des boucles de transfert de chaleur (3,5,7) ;

mesurer, en direct, le taux de comptage de neutrons dans chaque boucle de transfert de chaleur et générer électriquement à partir de celui-ci des signaux électriques de taux de comptage de neutrons retardés net représentatifs d'une partie, le cas échéant, du signal de taux de comptage de neutrons qui peut être imputée à un assemblage de combustible fraction ;

comparer électriquement lesdits signaux de taux de comptage de neutrons retardés net, le cas échéant, auxdites séries de signaux de répartition de fluide fractionnaire emmagasinés ; et

sélectionner en fonction de ladite comparaison l'assemblage combustible le plus susceptible de correspondre au site de l'assemblage combustible fracturé.

2. Procédé selon la revendication 1, dans lequel ladite étape de comparaison est caractérisée par la génération électrique des signaux de taux de comptage de neutrons retardés net pour chaque boucle de transfert de chaleur en tant que rapport du signal de taux de comptage de neutrons retardés net pour la boucle divisé par la somme des signaux de taux de comptage de neutrons retardés net pour toutes les boucles, et par la génération électrique d'un signal d'indice associé à chaque assemblage combustible et qui est fonction de la différence entre le taux de comptage de neutrons retardés net relatif pour chaque boucle de transfert de chaleur et le signal de facteur de répartition de fluide fractionnaire correspondant.

3. Procédé selon la revendication 2, dans lequel ladite étape consistant à générer électriquement ledit signal d'indice pour ledit assemblage combustible est caractérisé par la génération électrique d'un indice de domaine de proximité en tant que racine carrée de la somme des carrés des différences entre le signal de taux de comptage de neutrons retardés net relatif pour chaque boucle de transfert de chaleur et le signal de répartition de fluide fractionnaire pour ladite boucle emmagasine pour ledit assemblage combustible.

4. Procédé selon la revendication 3, dans lequel l'étape de sélection est caractérisée en ce que l'on sélectionné l'assemblage combustible dont le signal d'indice est le petit comme étant le site le plus probable de la fracture de l'assemblage combustible.

5. Procédé selon la revendication 1, dans lequel l'étape de sélection est caracterisée en ce que l'on sélectionne l'assemblage combustible dont la série de signaux de répartition de fluide fractionnaire correspond le plus étroitement aux signaux de taux de comptage de neutrons retardés net comme étant le site de la fracture de l'assemblage de combustible.

6. Procédé selon la revendication 1, dans lequel l'étape de comparaison est caractérisée par la génération d'un signal d'indice pour chaque assemblage combustible présentant une grandeur qui est inversement proportionnelle à la correspondance entre les signaux de répartition de fluide fractionnaire associes et les signaux de taux de comptage de neutrons retardés net, et

par le classement desdits assemblages combustibles par ordre de grandeur ascendant desdits signaux d'indice, la désignation d'un nombre prédéterminé d'assemblages combustibles de rang le plus élevé, l'identification, indépendamment du taux de comptage de neutrons retardés, des assemblages combustibles qui sont les plus susceptibles d'être fractures, et la sélection parmi de tels assemblages combustibles désignés, de l'assemblage combustible du plus haut rang identifie comme constituant le site le plus probable de la fracture.

7. Procédé selon la revendication 2 dans lequel l'étape consistant à générer ledit signal d'indice pour chaque assemblage combustible est caractérisée par le réglage des signaux de taux de comptage de neutrons retardés net relatif pour tenir compte du temps de transit du fluide de refroidissement du réacteur entre l'assemblage combustible et l'emplacement dans chaque boucle de transfert de chaleur auquel ledit taux de comptage de neutrons retardés est mesuré.

8. Appareil servant à localiser un assemblage combustible fracture dans le coeur d'un réacteur nucléaire (1) comportant au moins trois boucles de transfert de chaleur (3, 5, 7) dans lesquelles le fluide de refroidissement du réacteur passant par le coeur circule, ledit appareil étant caractérisé par :

des moyens de contrôle de neutrons retardés (17) présents dans chaque boucle pour générer pour celle-ci un signal de taux de comptage de neutrons, et

un ordinateur numérique programme pour :

emmagasiner pour chaque assemblage combustible une série de signaux de répartition de fluide fractionnaire représentatifs de la fraction de flux de fluide de refroidissement passant par l'assemblage combustible qui circule à travers chacune des boucles de transfert de chaleur ; effectuer une analyse statistique desdits signaux de taux de comptage de neutrons et générer à partir de celle-ci des signaux de taux de comptage de neutrons retardés net représentatifs de la partie, le cas échéant, des signaux de taux de comptage imputables à un assemblage combustible fracturé ; générer des signaux de taux de comptage net relatif pour chaque boucle en tant que rapport entre le signal de taux de comptage de neutrons net pour ladite boucle et le taux de comptage de neutrons net total pour toutes les boucles ; comparer pour chaque ensemble combustible la série de signaux de répartition de fluide fractionnaire emmagasinés auxdits signaux de taux de comptage de neutrons net relatif ; et pour sélectionner un nombre prédéterminé d'assemblages combustibles pour lesquels les résultats de telles comparaisons sont les plus rapprochés.

FIG. 1.

FIG. 2.

FTR CORE MAP

FIG. 3.

STARTUP
VIA DNI
OR FFTF — 39

COLLECT AND
VALIDATE DATA — 41

UPDATE Na-24
ACTIVITY AND
CORRECT DNM
BACKGROUND — 43

PERFORM
STATISTICAL
ANALYSIS OF
DNM DATA,
NOISE SPIKES,
CHI-SQUARE
TEST, ETC. — 45

OUTPUT
PRINTED
REPORT — 47

DN
ACTIVITY
DETECTED
? — 49    NO

SCRAM
LIMIT
REACHED
? — 51    NO

WARNING
LIMIT
REACHED
? — 55    NO

SHUTDOWN
LIMIT
REACHED
? — 57    NO

YES    YES    YES

SEND
APPROPRIATE
ALARM TO
CONTROL ROOM — 53

OUTPUT
PRINTED
REPORT — 63

PERFORM
TRIANGULATION
CALCULATION — 61

UPDATE
TOTAL NET
NEUTRONS,
WARNING AND
SHUTDOWN
LIMIT FLAGS
ON DISK — 59

FIG. 4.